# EUROPEAN PATENT APPLICATION

(11) **EP 4 583 214 A1**
(43) Date of publication of application: **09.07.2025**
(21) Application number: 23886292.4
(22) Date of filing: 01.11.2023
(51) Int. Cl.: H01M 10/04, H01M 4/04

(54) **ELECTRODE SHEET HEATING DEVICE, ELECTRODE SHEET HEATING METHOD, AND JELLY ROLL-TYPE ELECTRODE ASSEMBLY**

(30) Priority: 01.11.2022 KR 20220144042
(71) Applicant: LG Energy Solution, Ltd., Seoul 07335 (KR)
(72) Inventor: KWON, Jung Geun, Daejeon 34122 (KR); PAENG, Ki Hoon, Daejeon 34122 (KR)
(74) Representative: Goddar, Heinz J.
(86) International application number: PCT/KR2023/017310
(87) International publication number: WO 2024/096596

(57) **Abstract**

The present invention relates to an apparatus for heating an electrode sheet, the apparatus including: a heating part provided to heat a bottom surface of a predetermined area of the electrode sheet fed in a predetermined feeding direction, wherein the electrode sheet is wound to be manufactured as each of wound type electrodes of a jelly-roll-type electrode assembly, wherein the predetermined area includes one area of the electrode sheet which corresponds to an end area disposed on an outermost end of the wound type electrode of the jelly-roll-type electrode assembly, or when a stepped portion is generated between outer ends of the wound type electrodes due to a length difference between the wound type electrodes of the jelly-roll-type electrode assembly, the predetermined area includes one area of the electrode sheet which corresponds to an area, on which the stepped portion is generated, of one of the wound type electrodes.

## Description

### TECHNICAL FIELD

### CROSS-REFERENCE TO RELATED APPLICATION

The present application claims the benefit of the priority of Korean Patent Application Nos. 10-2022-0144042, filed on November 1, 2022, and 10-2023-0148852, filed on November 1, 2023, which are hereby incorporated by reference in their entirety.

### TECHNICAL FIELD

The present invention relates to an apparatus and method for heating an electrode sheet, and a jelly-roll-type electrode assembly.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type battery in which an electrode assembly is embedded in a cylindrical metal can, a prismatic type battery in which an electrode assembly is embedded in a prismatic metal can, a pouch type battery in which an electrode assembly is embedded in a pouch type case made of a laminate sheet, and the like.

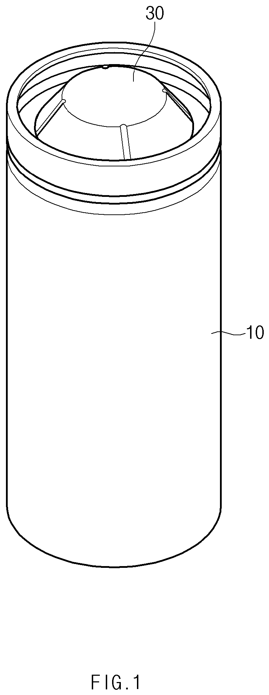

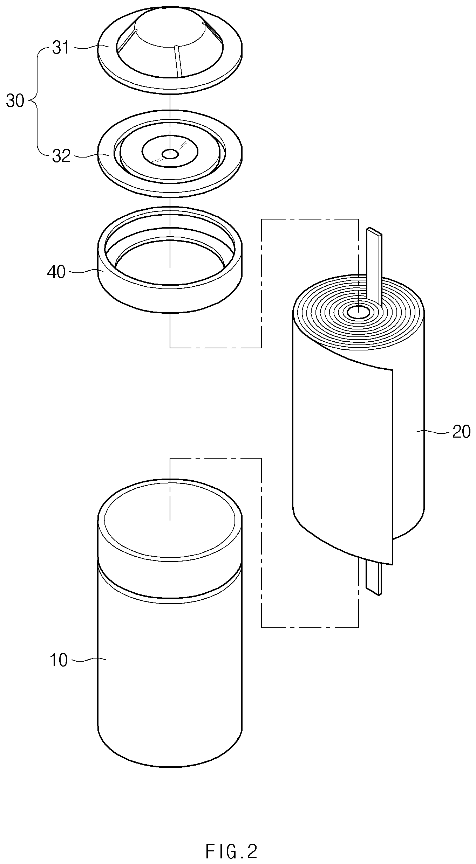

FIG. 1 is a perspective view illustrating a general cylindrical type battery. FIG. 2 is an exploded perspective view of the cylindrical type battery in FIG. 1. As illustrated in FIGS. 1 and 2, the cylindrical type battery may include a jelly-roll-type electrode assembly 20, and a cylindrical case 10 that accommodates the jelly-roll-type electrode assembly 20.

The jelly-roll-type electrode assembly 20 may be inserted into the cylindrical case 10 through an opening of the cylindrical case 10. After the insertion, an electrolyte may be injected into the cylindrical case 10 through the opening. After the injection of the electrolyte, the opening of the cylindrical case 10 may be covered with a cap assembly 30.

The cap assembly 30 may include a top cap 31 and a safety vent 32. The top cap 31 may be provided to be in close contact with the safety vent 32, and may be electrically connected to the safety vent 32. One of electrodes of the electrode assembly 20 may be electrically connected to the top cap 31 by using the safety vent 32 as a medium.

The cylindrical type battery may further include a gasket 40 for sealing a gap between the cylindrical case 10 and the cap assembly 30. An upper end of the cylindrical case 10 may be bent toward the gasket 40 after the gasket 40 is installed.

The jelly-roll-type electrode assembly 20 may have a structure in which a first wound type electrode and a second wound type electrode are wound with a separator therebetween. The wound type electrodes may have different lengths. Due to this difference in length, a stepped portion may be provided between the wound type electrodes at an outer end of the jelly-roll-type electrode assembly 20. In the secondary battery, a charging-discharging process may be performed for activation. During this process, a volume of the electrode assembly 20 may be expanded, and this expansion may cause strong stress to be applied to a portion of the wound type electrode which provides the stepped portion. This may cause breakage of a current collector of the wound type electrode. The breakage of the current collector may cause an increase in battery resistance to increase a fire risk caused by heat generation.

### DISCLOSURE OF THE INVENTION

### TECHNICAL PROBLEM

An object of the present invention is to provide an apparatus for heating an electrode sheet, in which even when any area of a wound type electrode of a jelly-roll-type electrode assembly provides a stepped portion of the jelly-roll-type electrode assembly, breakage of a current collector does not occur or the occurrence of the breakage is delayed in the area, a method for heating the electrode sheet, and a jelly-roll-type electrode assembly.

### TECHNICAL SOLUTION

In an embodiment, an apparatus for heating an electrode sheet may include a heating part provided to heat a bottom surface of a predetermined area of the electrode sheet fed in a predetermined feeding direction, wherein the electrode sheet is wound to be manufactured as each of wound type electrodes of a jelly-roll-type electrode assembly, wherein the predetermined area includes one area of the electrode sheet which corresponds to an end area disposed on an outermost end of the wound type electrode of the jelly-roll-type electrode assembly, or when a stepped portion is generated between outer ends of the wound type electrodes due to a length difference between the wound type electrodes of the jelly-roll-type electrode assembly, the predetermined area includes one area of the electrode sheet which corresponds to an area, on which the stepped portion is generated, of one of the wound type electrodes.

In another embodiment, the electrode sheet may include a current collector sheet and an active material layer applied onto the current collector sheet, and the heating part may heat the predetermined area at a temperature so that an elongation of the current collector sheet increases.

In still another embodiment, the heating part may heat the predetermined area at a temperature of 130°C to 150°C.

In still another embodiment, the electrode sheet may include a current collector sheet and an active material layer applied onto the current collector sheet, wherein, when an elongation of the current collector sheet provided on an adjacent area of the electrode sheet, which is adjacent to the predetermined area, is 10% or less, the heating part heats the predetermined area so that the current collector sheet provided in the predetermined area has an elongation of 13% to 20%.

In still another embodiment, the heating part may include: a support plate extending in a direction crossing the feeding direction to support a bottom surface of the electrode sheet; and a heater that heats the support plate.

In still another embodiment, the apparatus may further include an attaching part that attaches a tape to a top surface of the predetermined area supported by the support plate.

In still another embodiment, the attaching part may include: a pressing plate disposed to face the support plate and provided to move toward a top surface of the electrode sheet; and a driving rod that allows the pressing plate to move in a direction toward the top surface of the electrode sheet and in in a direction opposite to the direction.

In still another embodiment, the pressing plate may be provided to attach a tape attached to the top surface of the electrode sheet to a bottom surface of the pressing plate by adsorption.

In still another embodiment, in a jelly-roll-type electrode assembly having a structure in which a first wound type electrode and a second wound type electrode are wound with a separator therebetween, when a direction in which the first wound type electrode is wound from a center of the jelly-roll-type electrode assembly is referred to as a winding direction, an elongation of a first area including an end area disposed on an outermost end of the first wound type electrode may be higher than an elongation of a second area of the first wound type electrode, which is disposed to be adjacent to the first area in a direction opposite to the winding direction.

In still another embodiment, the first wound type electrode may include a first current collector sheet and a first active material layer applied onto the first current collector sheet, and the second wound type electrode may include a second current collector sheet and a second active material layer applied onto the second current collector sheet, wherein elongations of the first and second wound type electrodes are obtained based on elongations of the first and second current collector sheets, respectively.

In still another embodiment, a current collector sheet provided on the first area may have an elongation of 13% to 20%, and a current collector sheet provided on the second area may have an elongation of 10% or less.

In still another embodiment, an outermost layer of the first wound type electrode may be disposed outward relative to an outermost layer of the second wound type electrode in a radial direction of the jelly-roll-type electrode assembly, and an outermost end of the first wound type electrode may protrude outward relative to an outermost end of the second wound type electrode in the winding direction.

In still another embodiment, the first area may include an area of the first wound type electrode, which protrudes outward relative to the outermost end of the second wound type electrode.

In still another embodiment, the jelly-roll-type electrode assembly may further include a tape attached to an area of the first wound type electrode, which protrudes outward relative to the outermost end of the second wound type electrode.

In still another embodiment, the first wound type electrode may be a wound type negative electrode.

In still another embodiment, in a jelly-roll-type electrode assembly having a structure in which a first wound type electrode and a second wound type electrode are wound with a separator therebetween, an outermost layer of the first wound type electrode may be disposed outward relative to an outermost layer of the second wound type electrode in a radial direction of the jelly-roll-type electrode assembly, wherein, when a direction in which the first wound type electrode is wound from a center of the jelly-roll-type electrode assembly is referred to as a winding direction, an outermost end of the first wound type electrode may protrude from an outermost end of the second wound type electrode in the winding direction, wherein the first wound type electrode includes: a first area including one point of the first wound type electrode, which corresponds to the outermost end of the second wound type electrode; and a second area extending from the first area in the winding direction or in a direction opposite to the winding direction, wherein an elongation of the first area is higher than an elongation of the second area.

In still another embodiment, a method for heating an electrode sheet may include: a process (a) of feeding the electrode sheet in a predetermine feeding direction; and a process (b) of heating one surface of a predetermined area of each of the electrode sheets, wherein, in the process (b), the electrode sheet is heated at a temperature so that an elongation of a current collector sheet of the electrode sheet increases.

In still another embodiment, the predetermined area may include one area of the electrode sheet, which corresponds to an end area disposed on an outermost end of each of wound type electrodes of the jelly-roll-type electrode assembly. Alternatively, when a stepped portion is generated between outer ends of the wound type electrodes due to a length difference between the wound type electrodes of the jelly-roll-type electrode assembly, the predetermined area may include one area of the electrode sheet which corresponds to an area, on which the stepped portion is generated, of one of the wound type electrodes.

In still another embodiment, the method may further include attaching a tape to the other surface of the predetermined area of the electrode sheet simultaneously with the process (b).

In still another embodiment, in the process (b), a heating temperature may be determined based on characteristics of a material of the current collector sheet.

### ADVANTAGEOUS EFFECTS

According to the present invention, the predetermined area of the electrode sheet may be preheated during the manufacture of the electrode assembly to increase the elongation of the current collector sheet on the area. Accordingly, even when the predetermined area of the wound type electrode provides the stepped portion of the jelly-roll-type electrode assembly after the manufacture of the electrode assembly, the breakage of the current collector sheet may be prevented or delayed.

According to the present invention, the first area of the wound type electrode of the jelly-roll-type electrode assembly may have the higher elongation than the second area adjacent thereto. Accordingly, even then the predetermined area of the wound type electrode sheet provides the stepped portion of the jelly-roll-type electrode assembly, the breakage of the current collector sheet may be prevented or delayed.

### BRIEF DESCRIPTION OF THE DRAWINGS

FIG. 1 is a perspective view illustrating a general cylindrical type battery.
FIG. 2 is an exploded perspective view of the cylindrical type battery in FIG. 1.
FIG. 3 is a perspective view illustrating an apparatus for manufacturing a jelly-roll-type electrode assembly to which an apparatus for heating an electrode sheet is applied according to Embodiment 1 of the present invention.
FIG. 4 is a graph showing an elongation of copper over temperature.
FIG. 5 is a cross-sectional view illustrating a jelly-roll-type electrode assembly according to Embodiment 2 of the present invention.
FIG. 6 is a cross-sectional view illustrating a modified example of the jelly-roll-type electrode assembly in FIG. 5.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

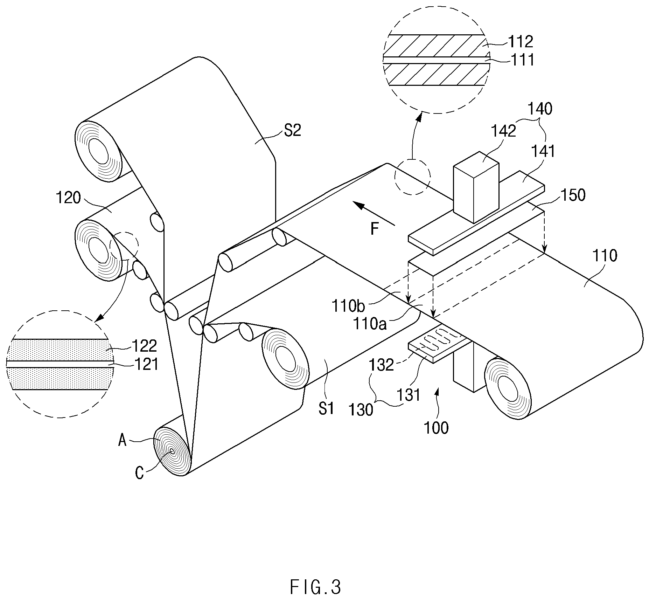

FIG. 3 is a perspective view illustrating an apparatus for manufacturing a jelly-roll-type electrode assembly to which an apparatus for heating an electrode sheet is applied according to Embodiment 1 of the present invention.

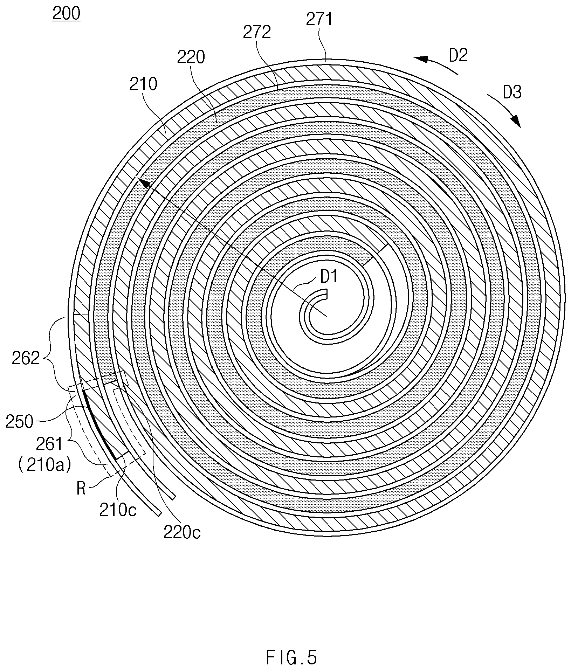

As illustrated in FIG. 3, a first separator sheet S1, a first electrode sheet 110, a second separator sheet S2, and a second electrode sheet 120, which are continuously supplied, may be wound around a predetermined winding center C to manufacture a jelly-roll-type electrode assembly A. Through this process, the jelly-roll-type electrode assembly A may have a structure in which a first wound type electrode 210 (see FIG. 5) and a second wound type electrode 220 (see FIG. 5) are wound with a separator 271, 272 (see FIG. 5) therebetween. After being wound, the first electrode sheet 110 may be cut to provide a portion of a jelly-roll-type electrode assembly 200 (see FIG. 5), and thus may be manufactured as the first wound type electrode 210 of the jelly-roll-type electrode assembly 200. The same applies to the second electrode sheet 120.

The first electrode sheet 110 may be a negative electrode sheet. The first electrode sheet 110 may include a first current collector sheet 111 and a first active material layer 112 applied onto the first current collector sheet 111. The first current collector sheet 111 may include a copper foil or the like, but the first current collector sheet 111 is not limited thereto.

The second electrode sheet 120 may be a positive electrode sheet. The second electrode sheet 120 may include a second current collector sheet 121 and a second active material layer 122 applied onto the second current collector sheet 121. The second current collector sheet 121 may include an aluminum foil or the like, but the second current collector sheet 121 is not limited thereto.

### Apparatus for heating electrode sheet (100)

An apparatus 100 for heating an electrode sheet according to this embodiment (hereinafter referred to as the heating apparatus) may include a heating part 130 provided to heat a bottom surface of a predetermined area 110a of the electrode sheet 110 fed in a predetermined feeding direction F.

FIG. 3 illustrates the heating apparatus 100 that heats the first electrode sheet 110 of the first and second electrode sheets 110 and 120. The heating apparatus 100 may also be provided to heat the second electrode sheet 120. Hereinafter, a case in which the heating apparatus 100 heats the first electrode sheet 110 will be described. In addition, FIG. 3 illustrates the heating apparatus 100 that heats a bottom surface of the first electrode sheet 110. The heating apparatus 100 may also be provided to heat a top surface of the first electrode sheet 110. For reference, the feeding direction F may be a direction in which the electrode sheet 100 is transferred to the winding center C in order to wind the electrode sheet 110.

The predetermined area 110a of the first electrode sheet 110 may include any area of the first electrode sheet 110, which corresponds to an end area 210a disposed on the outermost end 210c of the first wound type electrode 210 (see FIG. 5) of the jelly-roll-type electrode assembly 200 (see FIG. 5). For example, the predetermined area 110a of the first electrode sheet 110 may be any area of the first electrode sheet 110, which provides the end area 210a of the first wound type electrode 210 of the jelly-roll-type electrode assembly 200, when the predetermined area 110a of the first electrode sheet 110 is wound to provide the jelly-roll-type electrode assembly 200.

In the jelly-roll-type electrode assembly 200, as illustrated in FIG. 5, the outermost layer of the first wound type electrode 210 may be disposed outward relative to the outermost layer of the second wound type electrode 220 in a radial direction D1 of the jelly-roll-type electrode assembly A. The outermost end 210c of the first wound type electrode 210 may protrude outward relative to the outermost end 220c of the second wound type electrode 220 in a winding direction D2. The end area 210a of the first wound type electrode 210 may include a portion disposed outward relative to the outermost end 220c of the second wound type electrode 220 in the winding direction D2, or this portion and a portion inward from the outermost end 220c of the second wound type electrode 220 in a direction D3 opposite to the winding direction. The entire length of the first wound type electrode 210 may be longer than the entire length of the second wound type electrode 220. For reference, the winding direction D2 may be a direction in which the first wound type electrode 210 is wound from a center of the jelly-roll-type electrode assembly 200. In the jelly-roll-type electrode assembly 200, due to the structure as above, a stepped portion R may be provided on an end in the winding direction D2.

A volume of the electrode assembly 200 may be expanded during the charging-discharging process for activation. However, when the volume is expanded, strong stress may be applied to a portion of the first wound type electrode 210 that provides the stepped portion R. This may cause the breakage of the first current collector sheet 111 (see FIG. 3) of the first wound type electrode 210. The breakage of the first current collector sheet 111 may cause an increase in battery resistance to increase a fire risk caused by heat generation.

During the manufacture of the jelly-roll-type electrode assembly A, the heating apparatus 100 according to this embodiment may preheat the predetermined area 110a (see FIG. 3) of the electrode sheet 110 which corresponds to the end area 210a of the first wound type electrode 210, which is capable of providing the foregoing stepped portion R of the jelly-roll-type electrode assembly 200. As a result, an elongation of the first current collector sheet 111 of the first wound type electrode 210 may be increased in the end area 210a (see FIG. 5) of the first wound type electrode 210, and accordingly, the breakage of the first current collector sheet 111 may be prevented or delayed. This is because that copper or the like constituting the first current collector sheet 111 has a characteristic, in which as copper or the like is heated at a specific temperature, an elongation is increased, and when the elongation is increased, energy required for plastic collapse is also increased, and thus, it is difficult to be broken.

As above, during the manufacture of the jelly-roll-type electrode assembly A, the heating apparatus 100 according to this embodiment may preheat the predetermined area 110a (see FIG. 3) of the electrode sheet 110 including one area of the electrode sheet 110, which corresponds to the end area 210a of the wound type electrode 210, so that the elongation of the current collector sheet 111 in the area is increased. Accordingly, even when the end area 210a of the wound type electrode 210 provides the stepped portion R of the electrode assembly 200 after the electrode assembly 200 is manufactured, the breakage of the current collector sheet 111 may be prevented or delayed.

### Heating part (130)

As illustrated in FIG. 3, the heating apparatus 100 according to this embodiment may include the heating part 130 in order to heat the predetermined area 110a of the electrode sheet 110. Hereinafter, the heating part 130 will be described in detail.

The heating part 130 may include a support plate 131 provided to extend in a direction crossing the feeding direction F (e.g., direction perpendicular to the feeding direction) and support the bottom surface of the electrode sheet 110. The support plate 131 may be provided to move vertically so as to be in close contact with the bottom surface of the electrode sheet 110. Alternatively, the support plate 131 may be fixed to a position for being in close contact with the bottom surface of the electrode sheet 110. The heating part 130 may include a heater 132 provided to heat the support plate 131. The heater 132 may be a coil heater embedded in the support plate 131. The heating part 130 may control the heater 132 to heat the support plate 131 so that the electrode sheet 110 supported by the support plate 131 is heated at a predetermined temperature.

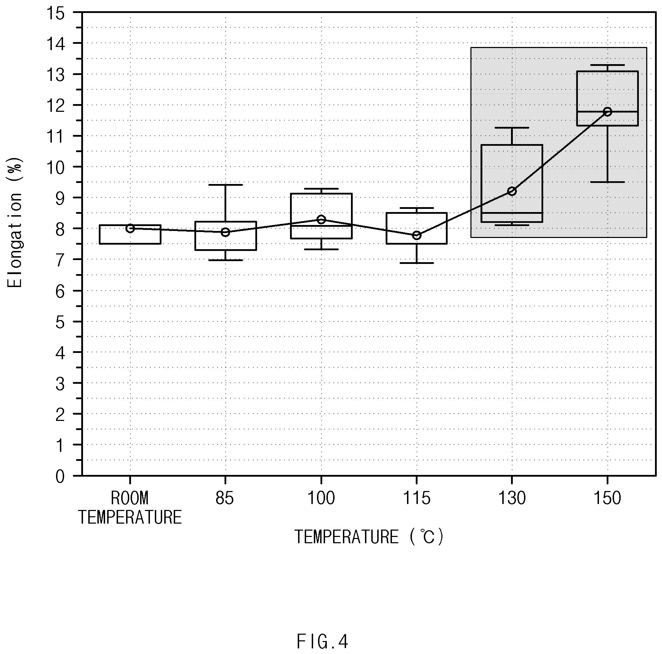

The heating part 130 may heat the predetermined area 110a of the electrode sheet 110 at a temperature so that the elongation of the current collector sheet 111 increases. For example, the heating part 130 may heat the predetermined area 110a of the electrode sheet 110 at a temperature of 130°C to 150°C. As illustrated in FIG. 4, this temperature range may be effective when the current collector sheet 111 is made of a copper foil. FIG. 4 is a graph showing an elongation of copper over temperature. In a copper material, the elongation thereof may be relatively greatly increased when the copper material is heated at the temperature of 130°C to 150°C. The temperature range in which the heating part 130 heats the predetermined area 110a may vary depending on characteristics of a material constituting the current collector sheet 111.

When the elongation of the current collector sheet 111 provided on an adjacent area 110b of the electrode sheet 110, which is adjacent to the predetermined area 110a of the electrode sheet 110, is 10% or less, the heating part 130 may heat the predetermined area 110a so that the current collector sheet provided in the predetermined area 110a has an elongation of 13% to 20%.

For reference, the elongation may be measured using a tensile testing machine. For example, the elongation of the current collector sheet (percentage that the current collector sheet stretches) may be measured by obtaining a heat-treated current collector sheet by a predetermined length (e.g., 10-15 mm), and then measuring a tensile length thereof until the current collector sheet breaks, while stretching the current collector sheet along one axis (e.g., at a speed of 50 mm/min).

### Attaching part (140)

As illustrated in FIG. 3, the heating apparatus 100 according to this embodiment may include an attaching part 140 provided to attach a tape 150 to a top surface of the predetermined area 110a of the electrode sheet 110 supported by the support plate 131. As described above, the current collector sheet is prone to breakage at the stepped portion R (see FIG. 5) of the electrode assembly 200, but when the tape 150 is pre-attached to this area during the manufacture of the electrode assembly A, the occurrence of the breakage as above may be prevented or delayed.

The attaching part 140 may include a pressing plate 141 disposed to face the support plate 131 and provided to move toward the top surface of the electrode sheet 110. The attaching part 140 may include a driving rod 142 provided to move the pressing plate 141 in a direction toward the top surface of the electrode sheet 110, and in a direction opposite to the direction. The pressing plate 141 may be moved, by the driving rod 142, to the top surface of the electrode sheet 110 supported by the support plate 131 so that the tape 150 is attached to the top surface of the electrode sheet 110. The pressing plate 141 may move until pressing the support plate 131 with the tape 150 therebetween.

The pressing plate 141 may selectively attach the tape 150 to a bottom surface thereof, and to this end, the pressing plate 141 may have a structure that adsorbs the tape 150. For example, the tape 150 may be attached to the bottom surface of the pressing plate 141 by adsorption, and the tape 150 may be detached from the bottom surface of the pressing plate 141 by release of the adsorption.

A tape attaching apparatus that attaches the tape 150 to the top surface of the electrode sheet 110 may include the pressing plate 141 for pressing to attach the tape 150, and the support plate 131 in order to support the bottom surface of the electrode sheet 110 during the pressing by the pressing plate 141. When a heat generating function is given to the support plate 131 of this attachment apparatus, attachment of the tape 150 and heating of the electrode sheet 110 may be achieved at the same time.

### Method for heating electrode sheet

An electrode sheet 110 may be heated through series of operations as follows.

First, the electrode sheet 110 may be fed in a predetermined feeding direction. One surface (e.g., bottom surface) of a predetermined area 110a of the electrode sheet 110 may be heated during the feeding or interruption of the feeding. The electrode sheet 110 may be heated at a temperature so that an elongation of a current collector sheet 111 of the electrode sheet 110 increases. The heating temperature may be determined based on characteristics of a material of the current collector sheet 111.

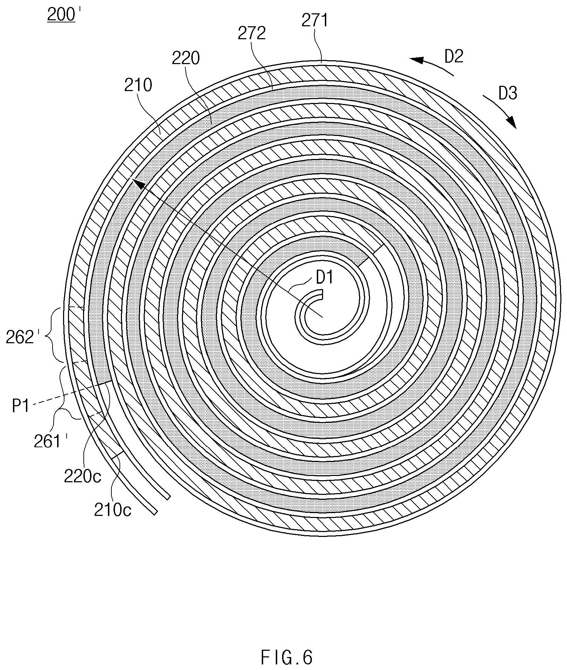

The predetermined area 110a of the electrode sheet 110 may include one area of the electrode sheet 110, which corresponds to an end area disposed on the outermost end of a wound type electrode of a jelly-roll-type electrode assembly. Alternatively, when a stepped portion is generated between outer ends of the wound type electrodes due to a length difference between the wound type electrodes of the jelly-roll-type electrode assembly, the predetermined area 110a of the electrode sheet 110 may include one area of the electrode sheet 110 which corresponds to an area, on which the stepped portion is generated, of one of the wound type electrodes. For example, the area on which the stepped portion is generated may be defined to include one point P1 (see FIG. 6) of the first wound type electrode 210, which corresponds to the outermost end 220c of a second wound type electrode 220 in the electrode assembly.

A tape may be attached to the other surface (e.g., top surface) of the predetermined area 110a of the electrode sheet, simultaneously with the heating of the predetermined area 110a of the electrode sheet 110.

### Embodiment 2

FIG. 5 is a cross-sectional view illustrating a jelly-roll-type electrode assembly according to Embodiment 2 of the present invention. A jelly-roll-type electrode assembly 200 according to Embodiment 2 may be an electrode assembly 200 in which an electrode sheet heat-treated by the heating apparatus 100 according to Embodiment 1 is employed. However, the electrode sheet applied to the jelly-roll-type electrode assembly 200 according to Embodiment 2 is not limited to the electrode sheet heat-treated by the heating apparatus 100 according to Embodiment 1.

The jelly-roll-type electrode assembly 200 according to this embodiment may have a structure in which a first wound type electrode 210 and a second wound type electrode 220 are wound with a separator 271, 272 therebetween. The first wound type electrode 210 may be a wound type negative electrode, and the second wound type electrode 220 may be a wound type positive electrode.

The first wound type electrode 210 may include a first area 261 including an end area 210a disposed on the outermost end 210c of the first wound type electrode 210. The first area 261 may be the same as the end area 210a, and may include the end area 210a and be wider than the end area 210a. The first wound type electrode 210 may include a second area 262 of the first wound type electrode 210, which is disposed to be adjacent to the first area 261 in a direction D3 opposite to a winding direction.

The first area 261 may be an area, which has a length of 3 cm to 6 cm in a winding direction D2, of the first wound type electrode 210. The length of the first area 261 may be a length to the extent that allows attachment of the tape. The first area 261 may be an area having a length corresponding to 5% to 10% of the entire length of the first wound type electrode 210 in the winding direction D2.

In this embodiment, an elongation of the first area 261 of the first wound type electrode 210 may be higher than an elongation of the second area 262. The elongations of the first and second wound type electrodes 210 and 220 may be obtained based on the elongations of the first and second current collector sheets 111 and 121 (see FIG. 3) that constitute the first and second wound type electrodes 210 and 220, respectively. For example, the elongation of the first current collector sheet 111 may be considered to be the elongation of the first wound type electrode 210.

As the first area 261 of the wound type electrode 210, which includes the end area 210a of the wound type electrode 210, has a higher elongation than the second area 262 adjacent thereto, the jelly-roll-type electrode assembly 200 according to this embodiment may prevent or delay breakage of the current collector sheet 111 even when the end area 210a of the wound type electrode 210 provides a stepped portion R of the jelly-roll-type electrode assembly 200.

In the first wound type electrode 210 of the jelly-roll-type electrode assembly 200 according to this embodiment, the current collector sheets 111 provided in the first area 261 may have an elongation of 13% to 20%, and the current collector sheets 111 provided in the second area 262 may have an elongation of 10% or less.

The outermost layer of the first wound type electrode 210 may be disposed outward relative to the outermost layer of the second wound type electrode 220 in a radial direction D1 of the jelly-roll-type electrode assembly 200. The outermost end 210c of the first wound type electrode 210 may protrude outward relative to the outermost end 220c of the second wound type electrode 220 in the winding direction D2. Due to this structure, the stepped portion R may be provided in the jelly-roll-type electrode assembly 200.

The first area 261 of the first wound type electrode 210 may include one area (hereinafter referred to as a protrusion area, for example, the area 210a in FIG. 5) of the first wound type electrode 210, which protrudes outward relative to the outermost end 220c of the second wound type electrode 220. A protrusion area 210a of the first wound type electrode 210 may be an area that provides the stepped portion R described above, and thus the first area 261 including the entirety of the protrusion area 210a may be provided to have a higher elongation than the other areas in order to prevent the occurrence of the breakage. For reference, the protrusion area 210a may be the same as the area 210a in FIG. 5, or may be a portion of the area 210a. The first area 261 may be defined as an area including the entirety of the protrusion area, or the entirety of the protrusion area and an area extending from the protrusion area.

The electrode assembly 200 according to this embodiment may further include a tape 250 attached to the protrusion area of the first wound type electrode 210. When the tape 250 attached to the protrusion area is further provided, the occurrence of the breakage may be more effectively prevented.

The first area and the second area that are described above may be defined as in FIG. 6. FIG. 6 is a cross-sectional view illustrating a modified example of the jelly-roll-type electrode assembly in FIG. 5. An electrode assembly 200' in FIG. 6 is different from the electrode assembly 200 in FIG. 5 in terms of the positions of the first and second areas.

In the electrode assembly 200' in FIG. 6, a first area 261' may be defined to include one point P1 (see FIG. 6) of a first wound type electrode 210, which corresponds to the outermost end 220c of a second wound type electrode 220. The second area 262' may be an area, which extends from the first area 261' in the winding direction D2 or a direction opposite to the winding direction Here, an elongation of the first area 261' may be higher than an elongation of the second area 262'. In a stepped portion of the electrode assembly, a portion, to which force is most greatly applied, of the first wound type electrode 210 may be the one point P1 of the first wound type electrode 210, which corresponds to the outermost end 220c of the second wound type electrode 220. In this modified example, considering this matter, the first area 261' may be defined as above. The same definitions of the first area and the second area (the predetermined area and the adjacent area) as above may apply to the heating apparatus according to Embodiment 1 described above.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

## Claims

1. An apparatus for heating an electrode sheet, the apparatus comprising:
a heating part configured to heat a bottom surface of a predetermined area of the electrode sheet fed in a predetermined feeding direction,
wherein the electrode sheet is wound to be manufactured as each of wound type electrodes of a jelly-roll-type electrode assembly,
wherein the predetermined area comprises one area of the electrode sheet which corresponds to an end area disposed on an outermost end of the wound type electrode of the jelly-roll-type electrode assembly, or
when a stepped portion is generated between outer ends of the wound type electrodes due to a length difference between the wound type electrodes of the jelly-roll-type electrode assembly, the predetermined area comprises one area of the electrode sheet which corresponds to an area, on which the stepped portion is generated, of one of the wound type electrodes.

2. The apparatus of claim 1, wherein the electrode sheet comprises a current collector sheet and an active material layer applied onto the current collector sheet,
wherein the heating part is configured to heat the predetermined area at a temperature so that an elongation of the current collector sheet increases.

3. The apparatus of claim 2, wherein the heating part heats the predetermined area at a temperature of 130°C to 150°C.

4. The apparatus of claim 1, wherein the electrode sheet comprises a current collector sheet and an active material layer applied onto the current collector sheet,
wherein, when an elongation of the current collector sheet provided on an adjacent area of the electrode sheet, which is adjacent to the predetermined area, is 10% or less, the heating part is configured to heat the predetermined area so that the current collector sheet provided in the predetermined area has an elongation of 13% to 20%.

5. The apparatus of claim 1, wherein the heating part comprises:
a support plate extending in a direction crossing the feeding direction to support a bottom surface of the electrode sheet; and
a heater configured to heat the support plate.

6. The apparatus of claim 5, further comprising an attaching part configured to attach a tape to a top surface of the predetermined area supported by the support plate.

7. The apparatus of claim 6, wherein the attaching part comprises:
a pressing plate disposed to face the support plate and configured to move toward a top surface of the electrode sheet; and
a driving rod configured to allow the pressing plate to move in a direction toward the top surface of the electrode sheet and in a direction opposite to the direction.

8. The apparatus of claim 7, wherein the pressing plate is configured to attach a tape to be attached to the top surface of the electrode sheet to a bottom surface of the pressing plate by adsorption.

9. A jelly-roll-type electrode assembly having a structure in which a first wound type electrode and a second wound type electrode are wound with a separator therebetween,
wherein, when a direction in which the first wound type electrode is wound from a center of the jelly-roll-type electrode assembly is referred to as a winding direction, an elongation of a first area comprising an end area disposed on an outermost end of the first wound type electrode is higher than an elongation of a second area of the first wound type electrode, which is disposed to be adjacent to the first area in a direction opposite to the winding direction.

10. The jelly-roll-type electrode assembly of claim 9, wherein the first wound type electrode comprises a first current collector sheet and a first active material layer applied onto the first current collector sheet, and
the second wound type electrode comprises a second current collector sheet and a second active material layer applied onto the second current collector sheet,
wherein elongations of the first and second wound type electrodes are obtained based on elongations of the first and second current collector sheets, respectively.

11. The jelly-roll-type electrode assembly of claim 10, wherein a current collector sheet provided on the first area has an elongation of 13% to 20%, and
a current collector sheet provided on the second area has an elongation of 10% or less.

12. The jelly-roll-type electrode assembly of claim 10, wherein an outermost layer of the first wound type electrode is disposed outward relative to an outermost layer of the second wound type electrode in a radial direction of the jelly-roll-type electrode assembly, and
an outermost end of the first wound type electrode protrudes outward relative to an outermost end of the second wound type electrode in the winding direction.

13. The jelly-roll-type electrode assembly of claim 12, wherein the first area comprises an area of the first wound type electrode, which protrudes outward relative to the outermost end of the second wound type electrode.

14. The jelly-roll-type electrode assembly of claim 12, further comprising a tape attached to an area of the first wound type electrode, which protrudes outward relative to the outermost end of the second wound type electrode.

15. The jelly-roll-type electrode assembly of claim 9, wherein the first wound type electrode is a wound type negative electrode.

16. A jelly-roll-type electrode assembly having a structure in which a first wound type electrode and a second wound type electrode are wound with a separator therebetween,
wherein an outermost layer of the first wound type electrode is disposed outward relative to an outermost layer of the second wound type electrode in a radial direction of the jelly-roll-type electrode assembly,
wherein, when a direction in which the first wound type electrode is wound from a center of the jelly-roll-type electrode assembly is wound is referred to as a winding direction, an outermost end of the first wound type electrode protrudes from an outermost end of the second wound type electrode in the winding direction,
wherein the first wound type electrode comprises:
a first area comprising one point of the first wound type electrode, which corresponds to the outermost end of the second wound type electrode; and
a second area extending from the first area in the winding direction or in a direction opposite to the winding direction,
wherein an elongation of the first area is higher than an elongation of the second area.

17. A method for heating an electrode sheet, the method comprising:
a process (a) of feeding the electrode sheet in a predetermine feeding direction; and
a process (b) of heating one surface of a predetermined area of the electrode sheet,
wherein, in the process (b), the electrode sheet is heated at a temperature so that an elongation of a current collector sheet of the electrode sheet increases.

18. The method of claim 17, wherein the predetermined area comprises one area of the electrode sheet, which corresponds to an end area disposed on an outermost end of each of wound type electrodes of the jelly-roll-type electrode assembly; or
when a stepped portion is generated between outer ends of the wound type electrodes due to a length difference between the wound type electrodes of the jelly-roll-type electrode assembly, the predetermined area comprises one area of the electrode sheet which corresponds to an area, on which the stepped portion is generated, of one of the wound type electrodes.

19. The method of claim 17, further comprising attaching a tape to the other surface of the predetermined area of the electrode sheet simultaneously with the process (b).

20. The method of claim 17, wherein, in the process (b), a heating temperature is determined based on characteristics of a material of the current collector sheet.
